# EUROPEAN PATENT SPECIFICATION

(11) **EP 2 789 244 B1**
(45) Date of publication and mention of the grant of the patent: **15.11.2017**
(21) Application number: 12855911.9
(22) Date of filing: 10.12.2012
(51) Int. Cl.: A23G 3/40, A23G 3/34, A21D 13/068, A23L 7/104, A23L 7/117, A23L 33/10, A21D 2/18

(54) **LOW-CALORIE, LOW-FAT CRACKER COMPOSITION CONTAINING XYLOSE, CRACKER MADE FROM THE COMPOSITION, AND METHOD FOR PREPARING THE COMPOSITION**
KALORIENARME FETTARME CRACKERZUSAMMENSETZUNG MIT XYLOSE, AUS DIESER ZUSAMMENSETZUNG HERGESTELLTER CRACKER UND VERFAHREN ZUR HERSTELLUNG DER ZUSAMMENSETZUNG
COMPOSITION POUR BISCUIT SALÉ À TENEUR RÉDUITE EN LIPIDES ET À TENEUR RÉDUITE EN CALORIES CONTENANT DU XYLOSE, BISCUIT SALÉ FABRIQUÉ AVEC LA COMPOSITION, ET PROCÉDÉ DE PRÉPARATION DE LA COMPOSITION

(30) Priority: 09.12.2011 KR 20110131488
(43) Date of publication of application: 15.10.2014
(73) Proprietor: CJ CheilJedang Corporation, Jung-gu Seoul 100-749 (KR)
(72) Inventor: KIM, Bum Suk, Seoul 135-986 (KR); KIM, Young Jae, Seoul 151-772 (KR); PARK, Jin Hee, Goyang-si Gyeonggi-do 411-410 (KR); PARK, Seung Won, Yongin-si Gyeonggi-do 446-727 (KR)
(74) Representative: Nevant, Marc
(86) International application number: PCT/KR2012/010715
(87) International publication number: WO 2013/085370

(56) References cited:
- EP-A1- 1 057 887
- DE-C- 702 679
- JP-A- H0 750 992
- JP-A- 2005 151 925
- US-A- 5 064 661
- US-A1- 2011 195 130
- DATABASE WPI Week 199517 Thomson Scientific, London, GB; AN 1995-127290 XP002741490, -& JP H07 50992 A (SANEIGEN FFI KK) 28 February 1995 (1995-02-28)
- DATABASE WPI Week 201257 Thomson Scientific, London, GB; AN 2012-K73889 XP002741491, & CN 102 550 624 A (SHANGRONG TECHNOLOGY CO LTD SUZHOU IND P) 11 July 2012 (2012-07-11)

## Description

### Technical Field

The present invention relates to a cracker composition containing xylose, refined sugar and soybean oil or brown rice oil, a cracker manufactured therefrom, and a method for manufacturing the same. More particularly, the present invention relates to a cracker composition containing xylose, refined sugar and soybean oil or brown rice oil exhibiting not only excellent coloring and gloss without spraying oils and fats on the surface of the cracker but also an excellent clean and fresh taste due to low-calorie and low fat content, a cracker manufactured therefrom, and a method for manufacturing the same.

### Background Art

Crackers are a baked good having relatively low water content. Being crispy and tender, crackers are considered a representative after-meal dessert and snack regardless of age or gender. Since crackers contain less sugar as compared with cookies or cakes, it has been generally thought that crackers have less impact on obesity and the like. In this regard, people tend to think that crackers are more beneficial than general confectioneries. On the contrary, it should be noted that crackers actually have higher fat content than general confectioneries and thus are high calorie products.

Oils and fats used in manufacturing crackers can be generally divided into two types. One is oils and fats such as shortening and the like, which are used in kneading dough, and the other is oils and fats sprayed onto the surfaces thereof after baking. Since the oils and fats used in kneading dough are essential raw materials for kneading the dough and shaping crackers, contents thereof cannot be greatly modified. The oils and fats sprayed after baking are used in order to offer coloring and gloss to the surface of crackers and to impart a tender texture and nutty taste.

Because of such sprayed oils and fats, crackers generally come to have high fat content, which increases total calories of crackers and has a negative influence on consumer health. Further, the oils and fats sprayed onto crackers can have drawbacks in that the oils and fats not only smear hands when consumers eat crackers, but also cause acidification during distribution and storage of crackers, which leads to hygienic problems.

On the other hand, xylose is a natural sweetener present in white birch, corn and the like, and is a 5-carbon sugar having a sweetness about 60% that of sugar. Xylose is known as a sugar substitute sweetener material capable of preventing some of the negative effects of sugar. When xylose is taken together with sugar, xylose may inhibit the activity of sucrase, which is a sugar digestive enzyme, and the decomposition of sugar, thereby preventing sugar from being absorbed in the body and excreting sugar from the body. Therefore, it is recognized that xylose has good effects in inhibition of sharp increase of blood glucose and prevention of adult diseases such as diabetes, obesity, and the like. Further, recent results of various studies on arabinoxylan, which is a complex polysaccharide consisting of arabinose and xylose, report that arabinoxylan is a physiologically active substance associated with anti-allergy, immune activity and anticancer effects.

Examples of techniques relating to xylose are disclosed in Korean Patent Publication No. 10-2008-0110344 and Korean Patent No. 10-0977075.

### Technical Problem

In order to solve these problems, the present inventors developed a cracker composition containing xylose. More particularly, by adding xylose to a cracker composition, the present inventors have developed a low-calorie cracker composition exhibiting not only excellent coloring and gloss without spraying oils and fats on the surfaces of crackers but also an excellent clean and fresh taste due to low fat content.

In order to prevent consumers from consuming excess fat and calories due to oils and fats sprayed onto the surfaces thereof, the present invention is aimed at providing a cracker composition containing xylose capable of lowering calories and fat content of the crackers while providing coloring and gloss to the surface of crackers, which can be provided by spraying oils and fats.

In addition, the present invention is aimed at providing a cracker composition containing xylose capable of preventing acidification during distribution and storage of crackers by means of not spraying oils and fats on the surfaces thereof.

Further, the present invention is aimed at providing a method for manufacturing crackers using the cracker composition containing xylose, without performing a separate process of spraying oils and fats.

Furthermore, the present invention is aimed at providing crackers containing xylose manufactured using the cracker composition containing xylose, which are low-fat and low-calorie products and exhibit excellent visual, olfactory, and gustatory functions.

### Technical Solution

The present invention relates to a cracker composition according to claim 1. In accordance with another aspect of the present invention, crackers containing xylose manufactured from the composition are provided.

In one embodiment, the crackers may contain 5 g to 20 g of fat per 100 g of crackers.

In accordance with a further aspect of the present invention, a method for manufacturing a cracker containing xylose includes:
a) adding water to the composition set forth in claim 1 to make a dough composition;
b) fermenting the dough composition;
c) shaping the fermented composition into a cracker; and
d) baking the shaped composition.

In one embodiment, the method does not further include the step of spraying oils and fats on the surfaces thereof after baking.

In accordance with yet another aspect of the present invention, xylose-containing crackers manufactured by the method are provided.

### Advantageous Effects

The cracker composition according to the present invention contains xylose, thereby exhibiting not only excellent coloring and gloss without spraying oils and fats on the surface of the cracker, but also an excellent clean and fresh taste due to low-calorie and low fat content.

More specifically, the present invention employs a cracker composition containing xylose in manufacture of crackers, instead of spraying oils and fats on the surfaces thereof, which can cause excess fat and calorie intake, thereby providing crackers, which exhibit excellent visual, olfactory, and gustatory functions, are good for heath and may be used as snacks for weight control.

Further, the present invention provides crackers containing xylose, which can prevent acidification of oils and fats occurring during distribution and storage of crackers, by not performing the step of spraying oil and fat on the surfaces thereof.

Furthermore, the present invention provides a method for manufacturing crackers requiring no separate step of spraying oils and fats by manufacturing the crackers using the cracker composition containing xylose.

### Description of Drawings

Fig. 1 shows results of appearance evaluation of crackers according to Experimental Example 2.
Fig. 2 shows results of preference evaluation of crackers according to Experimental Example 5.
Fig. 3 shows results of general preference evaluation of crackers according to Experimental Example 1.
Fig. 4 shows results of general intake frequency evaluation of crackers according to Experimental Example 1.

### Best Mode

Hereinafter, embodiments of the present invention will be described in more detail with reference to the accompanying drawings. A description of details apparent to those skilled in the art will be omitted herein.

One embodiment of the present invention provides a cracker composition according to claim 1. The expression "total composition" means the composition excluding mixing water among the cracker composition. The mixing water means water added to make the dough of the cracker composition.

As used herein, xylose refers to a natural sweetener present in white birch, corn and the like, and is a 5-carbon sugar.

In the present invention, xylose is preferably present in an amount of 0.05 parts by weight to 3 parts by weight, more preferably 0.1 parts by weight to 2 parts by weight, based on 100 parts by weight of the cracker composition containing xylose. Within this range, crackers manufactured from the composition can have appropriate gloss and browning effect on the surfaces thereof. When the content of xylose is less than 0.01 parts by weight, the effect of xylose can be insufficiently exhibited. When the content of xylose is greater than 5 parts by weight, browning on the surface of the crackers can be excessively exhibited.

In the cracker composition, xylose is present in an amount of 1 part by weight to 10 parts by weight based on 100 parts by weight of sugar contained in the cracker composition. When the content of xylose is less than 1 part by weight, the effect of xylose can be insufficient. When the content of xylose is greater than 10 parts by weight, the crackers can taste less sweet due to a relatively reduced amount of sugar, thereby causing reduction in overall texture. The composition contains 0.1 parts by weight to 10 parts by weight of soybean oil or brown rice oil based on 100 parts by weight of the total composition.

The soybean oil or brown rice oil refers to oil in a liquid state. With the soybean oil or brown rice oil added to the cracker composition, the crackers manufactured using the composition can exhibit enhanced nutty flavors, which are similar to or more strengthened than crackers manufactured by spraying oils and fats, thereby enhancing the texture of crackers.

The soybean oil or brown rice oil is preferably present in an amount of 0.5 parts by weight to 5 parts by weight, based on 100 parts by weight of the total composition. Within this range, crackers can exhibit appropriate nutty flavors.

The soybean oil or brown rice oil is preferably present in an amount of 10 parts by weight to 60 parts by weight based on 100 parts by weight of the total blended oil and fat contained in the cracker composition.

The cracker composition containing xylose may further include refined sugars, shortening, refined salts, emulsifying agents, fructose, leavening agents and/or wheat flour, and the like. The refined sugars, shortening, refined salts, emulsifying agents, fructose, leavening agents and/or wheat flour and the like are not particularly limited and any one known in the art may be employed.

The shortening refers to a plastic oil and fat product in a semi-solid state used as a raw material for processing products, such as confectioneries, baked goods, and the like. The shortening refers to a substance capable of exhibiting tender flavor and clean and bright color, removing unpleasant odor, and softening and smoothening texture to impart plasticity when added to a composition for bread or confectionery.

Herein, examples of the shortening may include butter, lard, edible oils, processed shortening, and margarine, without being limited thereto. These may be used alone or in combination of two or more thereof.

The emulsifying agent refers to a food additive used for emulsifying food.

The leavening agent refers to a substance capable of causing foaming through release of gas from dough.

Examples of the leavening agents may include yeast, baking powder, and baking soda, without being limited thereto. These may be used alone or in combination of two or more thereof.

The refined sugar is preferably present in an amount of 1 part by weight to 15 parts by weight, more preferably 1 part by weight to 8 parts by weight, based on 100 parts by weight of the cracker composition.

The shortening is preferably present in an amount of 1 part by weight to 20 parts by weight, more preferably 3 parts by weight to 13 parts by weight, based on 100 parts by weight of the cracker composition.

The refined salts are preferably present in an amount of 0.01 parts by weight to 5 parts by weight, more preferably 0.1 parts by weight to 3 parts by weight, based on 100 parts by weight of the cracker composition.

The emulsifying agent is preferably present in an amount of 0.01 parts by weight to 5 parts by weight, more preferably 0.01 parts by weight to 3 parts by weight, based on 100 parts by weight of the cracker composition.

The fructose is preferably present in an amount of 0.1 parts by weight to 15 parts by weight, more preferably 0.5 parts by weight to 10 parts by weight based on 100 parts by weight of the cracker composition.

The leavening agent is preferably present in an amount of 0.1 parts by weight to 15 parts by weight, more preferably 0.5 parts by weight to 10 parts by weight based on 100 parts by weight of the cracker composition.

The wheat flour is preferably present in an amount of 40 parts by weight to 90 parts by weight, more preferably 60 parts by weight to 85 parts by weight based on 100 parts by weight of the cracker composition.

According to another embodiment, there is provided crackers containing xylose manufactured from the composition of the present invention.

The crackers manufactured from the composition of the present invention may include 5 g to 20 g of fat per 100 g of crackers. This represents a reduction of about 20% to 84% in fat content as compared with fat content (25 g to 30 g/100 g) of typical crackers.

Since the crackers according to the present invention contain a significantly reduced content of fat, which is a high calorie component, the crackers have low calories as compared with typical commercially available crackers (510 kcal to 550 kcal/100 g). More specifically, the crackers of the present invention preferably have a caloric content of 350 kcal to 450 kcal/100 g. This represents a reduction of about 12% to 37% in calories as compared with the calories of typical commercially available crackers.

According to a further embodiment of the present invention, there is provided a method for manufacturing crackers containing xylose, including: a) adding water to a composition of claim 1 to make dough; b) fermenting the dough composition; c) shaping the fermented composition into a cracker; and d) baking the shaped composition.

The water added in kneading dough refers to mixing water in order to make the dough of the cracker composition. It is preferable to use water having a temperature of 30°C to 50°C.

The method for performing fermentation is not particularly limited and any typical method in the art may be used. For example, fermentation may be carried out by fermenting the obtained dough in a fermenter at a temperature from 25°C to 40°C and a relative humidity from 60% to 80% for 30 minutes to 3 hours, without being limited thereto.

The shaping operation refers to a process of cutting the fermented composition into a shape of crackers in suitable size and thickness.

The method for performing the shaping operation is not particularly limited and any typical method in the art may be used. An example of performing the shaping operation may include supplying the fermented composition to a 3-stage roller such that the composition has a thickness of about 1 mm to about 5 mm, followed by shaping crackers in a circular shape having a diameter of about 20 Φ to 60 Φ or in a rectangular shape having a size of about 20 mm to about 60 mm using a rotary type or a stamping type shaper, without being limited thereto.

The baking operation refers to a process of baking the shaped composition in an oven. The method for performing the baking operation is not particularly limited and any typical method in the art may be used. An example of performing the baking operation may include baking the composition shaped into a circle or rectangle in a continuous oven at 200°C to 300°C for 3 minutes to 10 minutes, without being limited thereto.

The method for manufacturing crackers containing xylose according to the present invention does not include a separate process of spraying oils and fats on the surfaces thereof after baking.

The process of spraying oils and fats is usually performed in manufacture of confectioneries such as crackers and the like, and may be performed by spraying oils and fats at about 40°C to 50°C in an amount of about 5 wt% to 15 wt% based on the weight of crackers on the surfaces of the baked crackers. Examples of oils and fats may include palm oil or soybean oil and the like.

The sprayed oils and fats may serve to make the color of cracker surfaces brown and give crackers gloss, thereby enhancing the function of crackers. However, due to these oils and fats sprayed onto crackers to enhance the function of products, the overall fat content of crackers is increased, which in turn increases the total calorie of crackers, thereby providing a negative influence on consumer health. Further, the oils and fats sprayed onto crackers cause inconvenience when consumers eat the crackers because the oils and fats smear hands. Further, the oils and fats cause hygienic problems in that the oils and fats cause acidification during distribution and storage of the crackers.

The method for manufacturing crackers according to the present invention does not include the operation of spraying oils and fats. As a result, the method provides crackers capable of solving the aforementioned problems while maintaining or enhancing the effect of imparting coloring and gloss, which is provided by sprayed oils and fats in the related art.

### Mode for Invention

Hereinafter, the present invention will be described in more detail with reference to the following examples, comparative examples, and experimental examples. It should be understood that these examples are provided for illustration only and are not to be construed in any way as limiting the scope of the invention.

### Example 1

### Manufacturing crackers containing xylose without spraying oils and fats

1) To a mixing bowl filled with 4.6 parts by weight of white sucrose, 8.3 parts by weight of butter, 1.8 parts by weight of brown rice oil, 0.6 parts by weight of refined salt, 0.1 parts by weight of emulsifying agent, 2.0 parts by weight of fructose, 3.4 parts by weight of leavening agent, and 0.3 parts by weight of xylose based on 100 parts by weight of a cracker composition, 140 g of water at 40°C was poured, followed by mixing such that the above ingredients were dispersed and dissolved.
2) To the mixture, 78.1 parts by weight of wheat flour was added, followed by mixing for 10 minutes to knead the dough, after which formation of gluten was observed. To the mixture in which gluten was formed, 0.8 parts by weight of an enzyme formulation was added, followed by further mixing for 2 minutes.
3) The prepared dough was subjected to fermentation in a fermenter at 35°C and 70% RH for 1.5 hours.
4) The fermented dough was subjected to rolling to a thickness of 3 mm using a 3-stage roll, followed by shaping the dough in a rectangular shape having a size of 35 mm x 50 mm using a stamping type shaper.
5) The shaped dough was placed in a continuous oven and baked at 250°C for 7 minutes.

### Comparative Example 1

### Manufacturing crackers containing no xylose without spraying oils and fats

Crackers were manufactured in the same manner as in Example 1 except that 10.1 parts by weight of butter instead of xylose and brown rice oil, 78.3 parts by weight of wheat flour, and 0.9 parts by weight of an enzyme formulation were used.

### Comparative Example 2

### Manufacturing crackers containing no xylose by spraying oils and fats

Crackers were manufactured in the same manner as in Comparative Example 1 by further performing operation 6) after baking operation 5).

6) Soybean oil stored in a storage tank at 45°C was sprayed onto the surfaces of the baked crackers in an amount of 10 wt% based on the crackers.

### Comparative Example 3

### Manufacturing crackers containing xylose by spraying oils and fats

Crackers were manufactured in the same manner as in Example 1 by further performing operation 6) as in Comparative Example 2 after baking operation 5).

### Experimental Example 1

### Cracker preference and intake frequency of general consumers

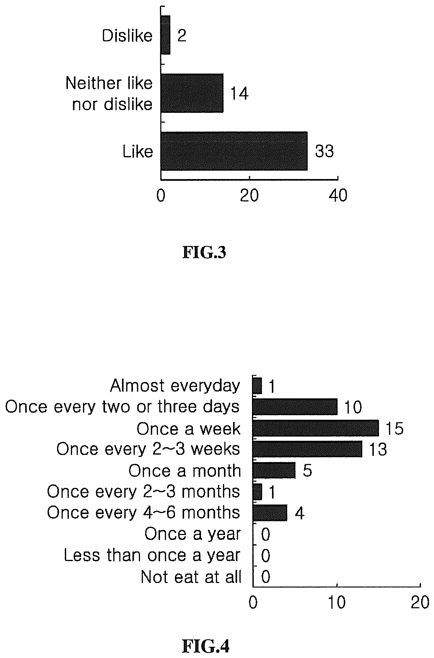

In order to measure cracker preference and intake frequency of general consumers, a survey as depicted in Figs. 3 and 4 was conducted in 49 women ranging from 25 to 49 years old.

As a result of the analysis of the survey, it was found that 67% of respondents enjoyed crackers, and 50% or more of respondents ate crackers at least once a week.

Considering the above result, it was confirmed that lowering fat content and calories of crackers were an important issue in view of nutrition of consumers.

### Experimental Example 2

### Appearance evaluation of crackers

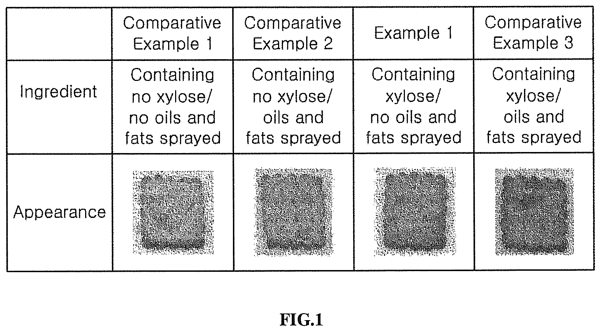

The appearance of crackers prepared in Example 1 and Comparative Examples 1 to 3 was observed and evaluated. The evaluation results are shown in Fig. 1.

As shown in Fig. 1, browning effect, which is an important quality of crackers, was remarkable in crackers of Example 1. Further, in view of appearance, the crackers of Example 1 were found to have the most appetizing coloring and gloss among the four types of crackers.

In Comparative Example 1, since the crackers had excessively bright and white color, it was hardly said the crackers had appetizing appearance. In Comparative Example 2, although the crackers had a slight browning effect, it was found that the crackers had a lower color tone than in Example 1. Further, although the crackers had better gloss than in Example 1, the crackers could cause a lack of pleasure in some consumers, due to excessive gloss.

In Comparative Example 3, the crackers had a severe browning effect and thus had a dark brown color. Thus, the crackers appeared to have been burnt, which was determined to provide a negative influence on preference.

### Experimental Example 3

### Evaluation of calories and fat content of crackers

Calories and fat content per 100 g of the crackers prepared in Example 1 and Comparative Example 2 were compared and evaluated. The results are shown in Table 1.

**TABLE 1**

| Ingredient | Comparative Example 2 | Example 1 | Effect |
|---|---|---|---|
| | Containing no xylose and oils and fats sprayed | Containing xylose and no oils and fats sprayed | |
| Calories (kcal/100 g) | 520 | 410 | Reduction of 20% |
| Fat content (g/100g) | 25 | 13 | Reduction of 48% |

As a result of the evaluation, the crackers of Example 1 showed a 20% reduction in calories and a 48% reduction in fat, as compared with the crackers of Comparative Example 2.

### Experimental Example 4

### Measuring changes in acidification of crackers

In order to measure the change in acidification of the crackers prepared in Example 1 and Comparative Example 2 over time, the change in acid values of the crackers prepared in Example 1 and Comparative Example 2 over time was measured. The results are shown in Table 2.

**TABLE 2**

| Time passed for distribution | Comparative Example 2 | | Example 1 | |
|---|---|---|---|---|
| | Acid value | Peroxide value | Acid value | Peroxide value |
| 1 month passed | 0.20 | 1.21 | 0.21 | 1.16 |
| 3 months passed | 0.22 | 3.48 | 0.21 | 1.38 |
| 4 months passed | 0.26 | 3.31 | 0.22 | 1.51 |
| 6 months passed | 0.28 | 3.05 | 0.23 | 1.42 |

The acid values tend to increase over time. Here, the acid values at 12 months, which is the final distribution period of general crackers, can be obtained using the following regression equation:
Comparative Example 2: y = 0.0169x + 0.1808 (y: acid value, x: month);
Example 1: y = 0.0042x + 0.2027 (y: acid value, x: month).

It is expected that, after 12 months, the crackers of Comparative Example 2 will have an acid value of about 0.38 and the crackers of Example 1 will have an acid value of about 0.2531. These results are measured at 25°C and 60% RH (relative humidity) corresponding to general storage conditions. In the case of actual distribution of products, since the acidification of oils and fats under high temperature and high humidity storage conditions can be accelerated, it is expected that the acid values of products actually distributed are likely to be much higher.

As the acidity increases, bad taste and/or off-flavor can occur in the crackers, thereby reducing consumer preference and causing digestive distress associated with consumption of spoiled foods.

### Experimental Example 5

### Evaluation of preference for crackers

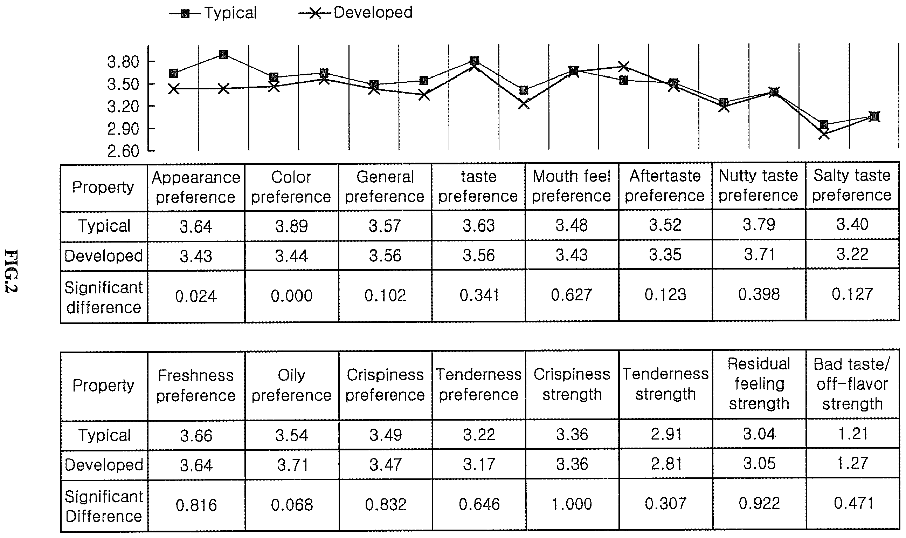

In order to evaluate the consumers' preference for crackers according to Example 1 or Comparative Example 2, a preference evaluation was performed by blind testing 49 women ranging from 25 to 49 years old. The test results are shown in Fig. 2. In Fig. 2, "typical" means crackers of Comparative Example 2 and "developed" means crackers of Example 1.

In Fig. 2, as the result of preference testing for crackers, the crackers of Example 1 having no oils and fats sprayed onto the surfaces thereof were found to exhibit substantially the same level of overall preference as that of crackers having oils and fats sprayed onto the surfaces thereof. Particularly, the crackers of Example 1 showed excellent preferences in view of nutty taste, freshness, crispiness and tenderness. Further, the crackers of Example 1 showed further improved preference with respect to the level of oiliness and feeling of residual oils and fats. In evaluation of bad taste/off-flavor strength, the crackers of Example 1 were found to be better than the other cases.

In the evaluation of overall preference for crackers according to Comparative Example 2 and Example 1, it was confirmed that the crackers of Example 1 manufactured without spraying oils and fats onto the surfaces thereof causing consumption of high fat and high calories exhibited similar to or better coloring and gloss than the crackers manufactured by spraying oils and fats onto the surfaces thereof. In view of olfactory and gustatory functions, the crackers of Example 1 exhibited nutty taste, freshness, crispiness and tenderness substantially equivalent to those of the crackers manufactured by spraying oil and fat on the surfaces thereof. From these results, it was confirmed that Example 1 provided excellent crackers having reduced calorie and fat content while maintaining good texture, which was substantially the same as that of the crackers manufactured by spraying oils and fats on the surfaces thereof.

## Claims

1. A cracker composition containing xylose, refined sugar and soybean oil or brown rice oil, wherein xylose is present in an amount of 0.01 parts by weight to 5 parts by weight based on 100 parts by weight of the total composition, wherein soybean oil or brown rice oil is present in an amount of 0.1 part by weight to 10 parts by weight based on 100 parts by weight of the total composition,
and wherein xylose is present in an amount of 1 part by weight to 10 parts by weight based on 100 parts by weight of sugar.

2. A cracker containing xylose manufactured from the cracker composition according to claim 1.

3. The cracker containing xylose according to claim 2, wherein the cracker contains 5 g to 20 g of fat content per 100 g of the cracker.

4. A method for manufacturing a cracker containing xylose, comprising:
a) adding water to the composition according to claim 1 to make a dough of the composition;
b) fermenting the dough composition;
c) shaping the fermented composition into a cracker; and
d) baking the shaped composition.

5. The method according to claim 4, wherein spraying oils and fats onto a surface of the cracker is not performed after baking.

6. A cracker containing xylose manufactured by the method according to claim 5.

## Patentansprüche

1. Crackerzusammensetzung, die Xylose, raffinierten Zucker und Sojaöl oder Naturreisöl enthält, wobei Xylose in einer Menge von 0,01 bis 5 Gewichtsanteilen in Bezug auf 100 Gewichtsanteile der Gesamtzusammensetzung vorhanden ist, wobei Sojaöl oder Naturreisöl in einer Menge von 0,1 bis 10 Gewichtsanteile in Bezug auf 100 Gewichtsanteile der Gesamtzusammensetzung vorhanden ist, und wobei Xylose in einer Menge von 1 bis 10 Gewichtsanteilen in Bezug von 100 Gewichtsanteilen des Zuckers vorhanden ist.

2. Xylosehaltiger Cracker, der aus der Crackerzusammensetzung nach Anspruch 1 hergestellt ist.

3. Xylosehaltiger Cracker nach Anspruch 2, wobei der Cracker 5 bis 20 g Fettgehalt pro 100 g des Crackers enthält.

4. Verfahren zum Herstellen eines xylosehaltigen Crackers, umfassend:
a) Hinzufügen von Wasser zu der Zusammensetzung nach Anspruch 1, um einen Teig aus der Zusammensetzung herzustellen,
b) Fermentieren der Teigzusammensetzung,
c) Ausformen der fermentierten Zusammensetzung in einen Cracker und
d) Backen der geformten Zusammensetzung.

5. Verfahren nach Anspruch 4, wobei kein Aufsprühen von Ölen und Fetten auf eine Oberfläche des Crackers nach dem Backen durchgeführt wird.

6. Xylosehaltiger Cracker, der durch das Verfahren nach Anspruch 5 hergestellt ist.

## Revendications

1. Composition de biscuit apéritif contenant du xylose, du sucre raffiné et de l'huile de soja ou de l'huile de riz brun, où le xylose est présent dans une quantité de 0,01 partie en masse à 5 parties en masse sur la base de 100 parties en masse de la composition totale, où l'huile de soja ou l'huile de riz brun est présente dans une quantité de 0,1 partie en masse à 10 parties en masse sur la base de 100 parties en masse de la composition totale, et où le xylose est présent dans une quantité de 1 partie en masse à 10 parties en masse sur la base de 100 parties en masse de sucre.

2. Biscuit apéritif contenant du xylose fabriqué à partir de la composition de biscuit apéritif selon la revendication 1.

3. Biscuit apéritif contenant du xylose selon la revendication 2, dans lequel le biscuit apéritif contient de 5 g à 20 g de teneur en graisse pour 100 g du biscuit apéritif.

4. Procédé de fabrication d'un biscuit apéritif contenant du xylose, comprenant :
a) l'addition d'eau à la composition selon la revendication 1 pour fabriquer une pâte de la composition ;
b) la fermentation de la composition de pâte ;
c) le façonnage de la composition fermentée en un biscuit apéritif ; et
d) la cuisson de la composition façonnée.

5. Procédé selon la revendication 4, où aucune pulvérisation d'huiles et de graisses n'est réalisée sur une surface du biscuit apéritif après la cuisson.

6. Biscuit apéritif contenant du xylose fabriqué par le procédé selon la revendication 5.
